# EUROPÄISCHE PATENTSCHRIFT

(11) **EP 3 346 352 B1**
(45) Veröffentlichungstag und Bekanntmachung des Hinweises auf die Patenterteilung: **03.11.2021**
(21) Anmeldenummer: 17211092.6
(22) Anmeldetag: 29.12.2017
(51) Int. Cl.: G05F 1/563, G05F 1/571, G05F 1/565, G05F 1/567, G05F 1/575, G05F 1/577, G05F 1/595

(54) **ELEKTRONISCHE FUNKTIONSGRUPPE**
ELECTRONIC FUNCTIONAL GROUP
GROUPE FONCTIONNEL ÉLECTRONIQUE

(30) Priorität: 04.01.2017 DE 102017100125
(43) Veröffentlichungstag der Anmeldung: 11.07.2018
(73) Patentinhaber: Krohne Messtechnik GmbH, 47058 Duisburg (DE)
(72) Erfinder: Florin, Wilhelm, 47198 Duisburg (DE)
(74) Vertreter: Gesthuysen Patentanwälte

(56) Entgegenhaltungen:
- DE-A1- 10 220 276
- DE-A1-102006 038 158
- DE-B3-102015 211 028
- US-A1- 2012 001 602

## Beschreibung

Die Erfindung betrifft eine elektrische Funktionsgruppe mit einer Steuerungseinrichtung und einem ersten Spannungsregler. Dabei weist die Steuerungseinrichtung einen Versorgungsspannungseingang und der erste Spannungsregler sowohl einen ersten Versorgungsspannungseingang als auch einen ersten Versorgungsspannungsausgang auf. Weiter ist der erste Spannungsregler zum Anschluss an eine Versorgungsspannungsquelle über den ersten Versorgungsspannungseingang und zur Versorgung der Steuerungseinrichtung über den ersten Versorgungsspannungsausgang ausgebildet. Der erste Versorgungsspannungsausgang des ersten Spannungsreglers und der Versorgungsspannungseingang der Steuerungseinrichtung sind miteinander elektrisch leitend verbunden.

Darüber hinaus betrifft die Erfindung ein Messgerät mit zumindest einer elektrischen Funktionsgruppe der beschriebenen Art.

Bei einem solchen Messgerät kann es sich zum Beispiel um ein Durchfluss-, Füllstands-, Temperatur-, Druck-, Analyse-, Gas- oder Dampfmessgerät handeln. Das Messgerät ist dabei vorzugsweise als Feldgerät ausgebildet. Ein Feldgerät ist eine technische Vorrichtung der Prozessautomation und für gewöhnlich ein Aktor oder ein Sensor oder eine Kombination aus einem Aktor und einem Sensor. Aktoren sind zum Beispiel Stellenglieder und Ventile und Sensoren sind zum Beispiel die zuvor genannten Messgeräte. Feldgeräte weisen für gewöhnlich eine Schnittstelle für einen Feldbus auf und sind zur Kommunikation mit einem Steuerungs- und/oder Leitsystem ausgebildet.

Eine elektrische Funktionsgruppe ist zur Ausführung von zumindest einer Funktion und/oder einer Aufgabe im Betrieb ausgebildet. Die Steuerungseinrichtung der elektrischen Funktionsgruppe ist dabei dafür ausgebildet, die Ausführung der Funktion und/oder der Aufgabe zu steuern. Oftmals weist die Steuerungseinrichtung einen Mikrocontroller dafür auf. Die Steuerungseinrichtung benötigt zum Betrieb die Zuführung von elektrischer Leistung über den Versorgungsspannungseingang. Zur Gewährleistung eines sicheren Betriebs der Steuerungseinrichtung muss eine bei der Zuführung der elektrischen Leistung am Versorgungsspannungseingang anliegende Spannung innerhalb eines Versorgungsspannungsbereichs liegen.

Da eine von der Versorgungsspannungsquelle zur Verfügung gestellte elektrische Leistung oftmals mit einer Spannung einhergeht, die außerhalb des Versorgungsspannungsbereichs der Steuerungseinrichtung liegt, weist die elektrische Funktionsgruppe den ersten Spannungsregler auf. Ein Spannungsregler, wie zum Beispiel der erste Spannungsregler, weist einen Versorgungsspannungseingang und einen Versorgungsspannungsausgang auf. Der Spannungsregler erzeugt im Betrieb eine am Versorgungsspannungsausgang anliegende Ausgangsspannung, wobei die Ausgangsspannung im Rahmen der technischen Möglichkeiten konstant und damit unabhängig sowohl von einer am Versorgungsspannungseingang anliegenden Eingangsspannung als auch von einer am Versorgungsspannungsausgang angeschlossenen elektrischen Last, wie zum Beispiel der elektrischen Funktionsgruppe, ist. Der Spannungsregler benötigt zum Betrieb die Zuführung von elektrischer Leistung über den Versorgungsspannungseingang. Zur Gewährleistung eines sicheren Betriebs des Spannungsreglers muss die bei der Zuführung der elektrischen Leistung am Versorgungsspannungseingang anliegende Eingangsspannung innerhalb eines Versorgungsspannungsbereichs liegen. Dabei ist dem Spannungsregler auch die von der Last zum Betrieb notwendige elektrische Leistung über den ersten Versorgungsspannungseingang zuzuführen. Der erste Spannungsregler ist dadurch zur Versorgung der Steuerungseinrichtung mit elektrischer Leistung ausgebildet, dass er im Betrieb als feste Ausgangsspannung eine erste Versorgungsspannung innerhalb des Versorgungsspannungsbereichs der Steuerungseinrichtung erzeugt und die von der Steuerungseinrichtung benötigte elektrische Leistung am ersten Versorgungsspannungsausgang bereitstellt. Weiter ist der erste Spannungsregler dadurch zum Anschluss an die Versorgungsspannungsquelle ausgebildet, dass die Spannung der Versorgungsspannungsquelle in einem Versorgungsspannungsbereich des ersten Spannungsreglers liegt.

Für gewöhnlich müssen Messgeräte, und damit auch elektrische Funktionsgruppen, Anforderungen der funktionalen Sicherheit genügen. Funktionale Sicherheit eines Systems, wie zum Beispiel des Messgeräts oder der elektrischen Funktionsgruppe, bezeichnet den Teil der Sicherheit des Systems, der von der bestimmungsgemäßen Funktion des Systems abhängt, und ist zum Beispiel in der Normenreihe IEC 61508 geregelt. Diese Normenreihe fordert zum Beispiel die sichere Beherrschung von erkannten Fehlern in einem System und Übergang des Systems in einen sicheren Zustand.

Ein solcher Fehler ist zum Beispiel das Auftreten einer Überspannung am ersten Versorgungsspannungseingang des ersten Spannungsreglers, wobei die Überspannung geeignet ist, die bestimmungsgemäße Funktion der elektrischen Funktionsgruppe zu beeinträchtigen. Aus dem Stand der Technik ist bekannt, die Funktionsgruppe in einen sicheren Zustand, nämlich den ausgeschalteten Zustand, zu bringen, indem zum Beispiel die Versorgungsspannungsquelle abgeschaltet oder der erste Versorgungsspannungseingang über eine Strombegrenzung kurzgeschlossen wird. Jedoch ist diese elektrische Funktionsgruppe dann nicht mehr im Betrieb, also ausgefallen, und kann den Fehler auch nicht mehr an einen Empfänger melden.

Aufgabe der vorliegenden Erfindung ist deshalb die Angabe einer elektrischen Funktionsgruppe und eines Messgeräts mit einer elektrischen Funktionsgruppe, bei der bzw. bei dem die bestimmungsgemäße Funktion auch bei einem Fehler aufrechterhalten bleibt, ohne die funktionale Sicherheit zu beeinträchtigen.

Eine elektrische Funktionsgruppe gemäß dem Oberbegriff des unabhängigen Anspruchs 1 ist aus der US 2012/001602 A1 bekannt.

Die Erfindung bezieht sich gemäß einer ersten Lehre auf eine elektrische Funktionsgruppe, bei der die dargelegte Aufgabe gelöst ist. Die erfindungsgemäße elektrische Funktionsgruppe ist zunächst im Wesentlichen dadurch gekennzeichnet, dass die Funktionsgruppe einen zweiten Spannungsregler mit einem zweiten Versorgungsspannungseingang und einem zweiten Versorgungsspannungsausgang aufweist. Dieser zweite Spannungsregler ist zum Anschluss an die Versorgungsspannungsquelle über den zweiten Versorgungsspannungseingang und zur Versorgung sowohl des ersten Spannungsreglers als auch der Steuerungseinrichtung über den zweiten Versorgungsspannungsausgang ausgebildet. Dazu sind der zweite Versorgungsspannungsausgang des zweiten Spannungsreglers und der erste Versorgungsspannungseingang des ersten Spannungsreglers miteinander elektrisch leitend verbunden.

Der zweite Spannungsregler ist dadurch zur Versorgung des ersten Spannungsreglers und der Steuerungseinrichtung über den zweiten Versorgungsspannungsausgang mit elektrischer Leistung ausgebildet, dass er im Betrieb als feste Ausgangsspannung eine zweite Versorgungsspannung innerhalb des Versorgungsspannungsbereichs des ersten Spannungsreglers erzeugt und die von dem ersten Spannungsregler und der Steuerungseinrichtung benötigte elektrische Leistung am zweiten Versorgungsspannungsausgang bereitstellt. Weiter ist der zweite Spannungsregler dadurch zum Anschluss an die Versorgungsspannungsquelle ausgebildet, dass die Spannung der Versorgungsspannungsquelle in einem Versorgungsspannungsbereich des zweiten Spannungsreglers liegt.

Die elektrisch leitende Verbindung zum einen des zweiten Versorgungsspannungsausgangs des zweiten Spannungsreglers und des ersten Versorgungsspannungseingangs des ersten Spannungsreglers und zum anderen des ersten Versorgungsspannungsausgangs des ersten Spannungsreglers und des Versorgungsspannungseingangs der Steuerungseinrichtung miteinander bedeutet, dass der zweite Spannungsregler, der erste Spannungsregler und die Steuerungsreinrichtung elektrisch in Reihe geschaltet sind. Somit entnimmt im Betrieb der elektrischen Funktionsgruppe der zweite Spannungsregler über den zweiten Versorgungsspannungseingang der Versorgungsspannungsquelle die Leistung zum eigenen Betrieb und die zum Betrieb des ersten Spannungsreglers und der Steuerungseinrichtung, wobei am zweiten Versorgungsspannungsausgang des zweiten Spannungsreglers die zweite Versorgungsspannung anliegt. Der erste Spannungsregler entnimmt über den ersten Versorgungsspannungseingang entsprechend dem zweiten Spannungsregler die Leistung zum eigenen Betrieb und die zum Betrieb der Steuerungseinrichtung, wobei am ersten Versorgungsspannungsausgang des ersten Spannungsreglers die erste Versorgungsspannung anliegt. Schließlich entnimmt die Steuerungseinrichtung dem ersten Spannungsregler über den Versorgungsspannungseingang die Leistung zum eigenen Betrieb.

Ein Spannungsregler, wie der erste Spannungsregler oder der zweite Spannungsregler, ist zum Beispiel ein Schaltregler oder ein Linearregler. Vorzugsweise ist zumindest einer der beiden Spannungsregler ein Linearregler. Zum einen sind Linearregler preiswerter als Schaltregler und zum anderen weist eine Spannung am Versorgungsspannungsausgang eines Schaltregler im Gegensatz zu einer Spannung am Versorgungsspannungsausgang eines Linearreglers durch Schaltvorgänge des Schaltreglers verursachte Störsignale auf, welche einen bestimmungsgemäßen Betrieb der Funktionsgruppe beeinträchtigen können, und deshalb durch ein Filter vermindert werden müssen, wobei das Filter weitere Kosten verursacht.

Ein Linearregler ist entweder ein Längsregler oder ein Querregler. Vorzugsweise ist zumindest einer der beiden Spannungsregler ein Längsregler, da der Wirkungsgrad von einem Längsregler höher als der von einem Querregler ist. Bei einem Längsregler muss zum Betrieb eine Spannung am Versorgungseingangsspannung mindestens um eine minimale Differenzspannung größer sein als eine zu erzeugende und am Versorgungsspannungsausgang anliegende Spannung. Demnach ist die Verlustleistung im Längsregler proportional zur Differenzspannung. Die Verlustleistung wird dabei als Wärme abgeführt, wozu der Längsregler ausgebildet ist. Deshalb bieten sich als Längsreglern keine konventionellen Längsregler, sondern Low-Dropout-Längsregler an. Ein Low-Dropout-Längsregler weist im Gegensatz zu einem konventionellen Längsregler eine geringere für den Betrieb notwendige minimale Differenzspannung zwischen dem Versorgungseingangsspannung und dem Versorgungsausgangsspannung auf. Dadurch ist es möglich, eine Spannung am Versorgungsspannungseingang abzusenken, wodurch eine Verlustleistung im Low-Dropout-Längsregler geringer als bei einem konventionellen Längsregler ist.

Vorzugsweise sind sowohl der erste Spannungsregler als auch der zweite Spannungsregler Längsregler, insbesondere Low-Dropout-Längsregler. Wenn die beiden Spannungsregler Low-Dropout-Längsregler sind, kann eine von der Versorgungsspannungsquelle zur Verfügung gestellte Spannung im Vergleich zu konventionellen Längsreglern reduziert werden, wodurch die Verlustleistung im ersten und insbesondere auch im zweiten Spannungsregler abnimmt. Die Verlustleistung nimmt insbesondere im zweiten Spannungsregler ab, da dieser nicht nur wie der erste Spannungsregler die Leistung für die Steuerungseinrichtung, sondern auch die Leistung für den ersten Spannungsregler liefert.

Die erfindungsgemäße elektronische Funktionsgruppe hat gegenüber aus dem Stand der Technik bekannten elektrischen Funktionsgruppen den Vorteil, dass die bestimmungsgemäße Funktion der Funktionsgruppe auch bei einem Fehler, wie zum Beispiel bei einer Überspannung aufrechterhalten bleibt, ohne dass die funktionale Sicherheit der Funktionsgruppe beeinträchtigt wird. Das wird dadurch erreicht, dass neben dem ersten Spannungsregler auch ein zweiter Spannungsregler vorhanden ist und der erste Spannungsregler und der zweite Spannungsregler miteinander in Reihe geschaltet sind. Durch die Verwendung nicht nur eines Spannungsreglers, sondern durch die Verwendung von zwei Spannungsreglern wird eine Spannungsdifferenz zwischen der Versorgungsspannungsquelle und dem Versorgungsspannungsbereich der Steuerungseinrichtung nicht mehr einem einzigen Spannungsregler aufgebürdet, sondern auf zwei Spannungsregler verteilt. Dadurch ist die Empfindlichkeit der elektrischen Funktionsgruppe gegenüber Überspannungen im Vergleich zum Stand der Technik reduziert.

In der erfindungsgemäßen elektrischen Funktionsgruppe ist vorgesehen, dass der erste Spannungsregler derart ausgebildet ist, bei einem Ausfall des ersten Spannungsreglers den ersten Versorgungsspannungseingang und den ersten Versorgungsspannungsausgang miteinander elektrisch leitend kurzzuschließen. Dabei ist nicht nur die erste Versorgungsspannung am ersten Versorgungsspannungsausgang des ersten Spannungsreglers derart eingestellt, dass die erste Versorgungsspannung im Versorgungsspannungsbereich der Steuerungseinrichtung liegt, sondern ist auch die zweite Versorgungsspannung am zweiten Versorgungsspannungsausgang des zweiten Spannungsreglers derart eingestellt, dass die zweite Versorgungsspannung im Versorgungsspannungsbereich der Steuerungseinrichtung liegt. Somit erfolgt die Versorgung der Steuerungseinrichtung mit elektrischer Leistung bei Ausfall des ersten Spannungsreglers aus der Versorgungsspannungsquelle durch den zweiten Spannungsregler über den kurzgeschlossenen ersten Spannungsregler.

In einer Weiterbildung der zuvor beschriebenen Ausgestaltung ist vorgesehen, dass der erste Spannungsregler derart ausgebildet ist, dass eine Überspannung am ersten Versorgungsspannungseingang den Ausfall des ersten Spannungsreglers bewirkt. Somit bewirkt eine Überspannung am ersten Versorgungsspannungseingang des ersten Spannungsreglers, dass der erste Versorgungsspannungseingang und der erste Versorgungsspannungsausgang miteinander elektrisch leitend kurzgeschlossen werden. Dadurch bleibt die bestimmungsgemäße Funktion der Funktionsgruppe auch bei einem Fehler durch eine Überspannung am ersten Versorgungsspannungseingang aufrechterhalten, ohne die funktionale Sicherheit zu beeinträchtigen.

Bei der erfindungsgemäßen elektrischen Funktionsgruppe, bei welcher der erste Spannungsregler derart ausgebildet ist, dass bei einem Ausfall des ersten Spannungsreglers der erste Versorgungsspannungseingang und der erste Versorgungsspannungsausgang miteinander kurzgeschlossen werden, ist vorgesehen, dass die Steuerungseinrichtung im Betrieb eine erste Überwachungsspannung am Versorgungsspannungseingang der Steuerungseinrichtung überwacht und eine Veränderung der ersten Überwachungsspannung dem Ausfall des ersten Spannungsreglers zuordnet. Denn wenn der erste Spannungsregler ausfällt, vorzugsweise der erste Spannungsregler dabei derart ausgebildet ist, dass eine Überspannung am ersten Versorgungsspannungseingang den Ausfall des ersten Spannungsreglers bewirkt, liegt am Versorgungsspannungseingang der Steuerungseinrichtung nicht mehr die erste Versorgungsspannung, sondern die zweite Versorgungsspannung an. Dazu ist die Steuerungseinrichtung zur Überwachung der ersten Überwachungsspannung am Versorgungsspannungseingang der Steuerungseinrichtung ausgebildet. Vorzugsweise wird eine solche Veränderung der ersten Überwachungsspannung einem Steuerungs- und/oder Leitsystem gemeldet.

In einer weiteren Ausgestaltung der erfindungsgemäßen elektrischen Funktionsgruppe ist vorgesehen, dass der zweite Spannungsregler derart ausgebildet ist, bei einem Ausfall des zweiten Spannungsreglers den zweiten Versorgungsspannungseingang und den zweiten Versorgungsspannungsausgang miteinander elektrisch leitend kurzzuschließen. Bei dieser Ausgestaltung ist der Versorgungsspannungsbereich am ersten Versorgungsspannungseingang des ersten Spannungsreglers derart gewählt, dass ein sicherer Betrieb des ersten Spannungsregler sowohl mit der zweiten Versorgungsspannung am zweiten Versorgungsspannungsausgang des zweiten Spannungsreglers als auch mit der Spannung der Versorgungsspannungsquelle gewährleistet ist. Somit erfolgt die Versorgung der Steuerungseinrichtung mit elektrischer Leistung bei Ausfall des zweiten Spannungsreglers aus der Versorgungsspannungsquelle über den kurzgeschlossenen zweiten Spannungsregler durch den ersten Spannungsregler.

Ein Spannungsregler ist schon dann derart ausgebildet, bei einem Ausfall seinen Versorgungsspannungseingang mit seinem Versorgungsspannungsausgang kurzzuschließen, wenn bei einer Vielzahl von diesen Spannungsreglern der Kurzschluss auch nur bei wenigen von diesen Spannungsreglern bei einem Ausfall gebildet wird.

In einer Weiterbildung der zuvor beschriebenen Ausgestaltung ist vorgesehen, dass der zweite Spannungsregler derart ausgebildet ist, dass eine Überspannung am zweiten Versorgungsspannungseingang den Ausfall des zweiten Spannungsreglers bewirkt. Somit bewirkt eine Überspannung am zweiten Versorgungsspannungseingang des zweiten Spannungsreglers, dass der zweite Versorgungsspannungseingang und der zweite Versorgungsspannungsausgang miteinander elektrisch leitend kurzgeschlossen werden. Dadurch bleibt die bestimmungsgemäße Funktion der Funktionsgruppe auch bei einem Fehler durch eine Überspannung am zweiten Versorgungsspannungseingang aufrechterhalten, ohne die funktionale Sicherheit zu beeinträchtigen.

Bei einer Ausgestaltung der elektrischen Funktionsgruppe, bei welcher der zweite Spannungsregler derart ausgebildet ist, dass bei einem Ausfall des zweiten Spannungsreglers der zweite Versorgungsspannungseingang und der zweite Versorgungsspannungsausgang miteinander kurzgeschlossen werden, ist vorgesehen, dass die Steuerungseinrichtung im Betrieb eine zweite Überwachungsspannung am ersten Versorgungsspannungseingang des ersten Spannungsreglers überwacht und eine Veränderung der zweiten Überwachungsspannung dem Ausfall des zweiten Spannungsreglers zuordnet. Denn wenn der zweite Spannungsregler ausfällt, vorzugsweise der zweite Spannungsregler dabei derart ausgebildet ist, dass eine Überspannung am zweiten Versorgungsspannungseingang den Ausfall des zweiten Spannungsreglers bewirkt, liegt am ersten Versorgungsspannungseingang des ersten Spannungsreglers nicht mehr die zweite Versorgungsspannung, sondern die Spannung der Versorgungsspannungsquelle an. Dazu ist die Steuerungseinrichtung zur Überwachung der zweiten Überwachungsspannung am ersten Versorgungsspannungseingang des ersten Spannungsreglers ausgebildet. Vorzugsweise wird eine solche Veränderung der zweiten Überwachungsspannung einem Steuerungs- und/oder Leitsystem gemeldet.

In einer anderen Ausgestaltung ist vorgesehen, dass die Steuerungseinrichtung im Betrieb eine dritte Überwachungsspannung am zweiten Versorgungsspannungseingang des zweiten Spannungsreglers überwacht und eine Veränderung der dritten Überwachungsspannung einem Fehler zuordnet. Vorzugsweise wird ein solcher Fehler der dritten Überwachungsspannung einem Steuerungs- und/oder Leitsystem gemeldet.

Die Erfindung bezieht sich gemäß einer zweiten Lehre auf ein Messgerät mit zumindest einer elektrischen Funktionsgruppe der beschriebenen Art. Das erfindungsgemäße Messgerät ist zunächst im Wesentlichen dadurch gekennzeichnet, dass die Funktionsgruppe einen zweiten Spannungsregler mit einem zweiten Versorgungsspannungseingang und einem zweiten Versorgungsspannungsausgang aufweist. Dieser zweite Spannungsregler ist zum Anschluss an die Versorgungsspannungsquelle über den zweiten Versorgungsspannungseingang und zur Versorgung sowohl des ersten Spannungsreglers als auch der Steuerungseinrichtung über den zweiten Versorgungsspannungsausgang ausgebildet. Dazu sind der zweite Versorgungsspannungsausgang des zweiten Spannungsreglers und der erste Versorgungsspannungseingang des ersten Spannungsreglers miteinander elektrisch leitend verbunden.

Bei dem erfindungsgemäßen Messgerät ist die Funktionsgruppe gemäß einer der beschriebenen Ausgestaltungen und Weiterbildungen ausgebildet.

Die Ausführungen zur erfindungsgemäßen elektrischen Funktionsgruppe gelten entsprechend für das Messgerät mit zumindest einer elektrischen Funktionsgruppe und umgekehrt.

Im Einzelnen ist eine Vielzahl von Möglichkeiten gegeben, die erfindungsgemäße elektrische Funktionsgruppe und das erfindungsgemäße Messgerät auszugestalten und weiterzubilden. Dazu wird verwiesen sowohl auf die den unabhängigen Patentansprüchen nachgeordneten Patentansprüche als auch auf die nachfolgende Beschreibung eines bevorzugten Ausführungsbeispiels in Verbindung mit der Zeichnung. In der Zeichnung zeigt schematisch und abstrahiert
Fig. 1 ein Ausführungsbeispiel eines Messgeräts und
Fig. 2 ein Ausführungsbeispiel einer elektrischen Funktionsgruppe.

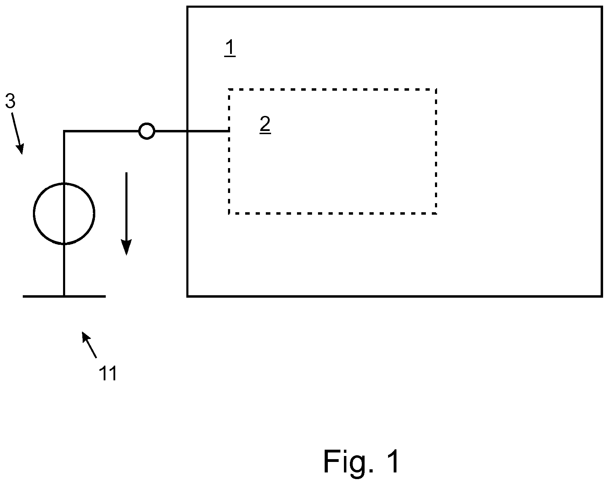

Fig. 1 zeigt das Messgerät 1 mit der elektrischen Funktionsgruppe 2. Das Messgerät 1 und somit auch die elektrische Funktionsgruppe 2 sind zur Versorgung mit elektrischer Leistung mit der Versorgungsspannungsquelle 3 elektrisch leitend verbunden.

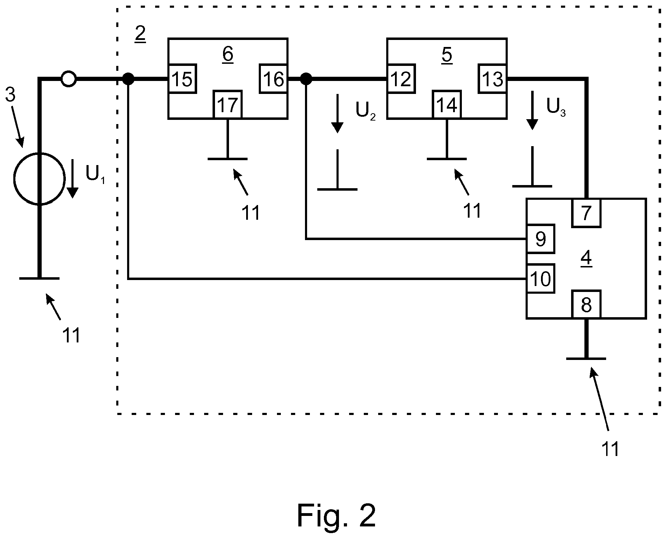

Fig. 2 zeigt wesentliche Elemente der elektrischen Funktionsgruppe 2. Die Funktionsgruppe 2 weist die Steuerungseinrichtung 4, den ersten Spannungsregler 5 und den zweiten Spannungsregler 6 auf.

Die Steuerungseinrichtung 4 ist vorliegend ein Mikrocontroller und weist den Versorgungsspannungseingang 7, den Masseanschluss 8, den ersten Spannungsmesseingang 9 und den zweiten Spannungsmesseingang 10 auf. Die Steuerungseinrichtung 4 benötigt zum Betrieb die Zuführung von elektrischer Leistung über den Versorgungsspannungseingang 7. Zur Gewährleistung eines sicheren Betriebs der Steuerungseinrichtung 4 muss eine bei der Zuführung der elektrischen Leistung am Versorgungsspannungseingang 7 anliegende Spannung innerhalb des Versorgungsspannungsbereichs von 2,7 V bis 3,6 V liegen. Der Masseanschluss 8 ist mit der Masse 11 verbunden.

Sowohl der erste Spannungsregler 5 als auch der zweite Spannungsregler 6 sind hier Low-Dropout-Längsregler. Somit weist der erste Spannungsregler 5 den ersten Versorgungsspannungseingang 12, den ersten Versorgungsspannungsausgang 13 und den ersten Masseanschluss 14 auf. Entsprechend weist der zweite Spannungsregler 6 den zweiten Versorgungsspannungseingang 15, den zweiten Versorgungsspannungsausgang 16 und den zweiten Masseanschluss 17 auf. Da es sich um Low-Dropout-Längsregler handelt, muss eine am ersten Versorgungsspannungseingang 12 oder am zweiten Versorgungsspannungseingang 15 anliegende Spannung nur um mindestens 200 mV höher sein als eine am ersten Versorgungsspannungsausgang 13 bzw. am zweiten Versorgungsspannungsausgang 16 zu erzeugende Spannung. Die Versorgungsspannungsquelle 3 und der zweite Versorgungsspannungseingang 15 sind elektrisch leitend miteinander verbunden. Weiter sind der zweite Versorgungsspannungsausgang 16 und der erste Versorgungsspannungseingang 12 elektrisch leitend miteinander verbunden. Auch der erste Versorgungsspannungsausgang 13 und der Versorgungsspannungseingang 7 sind elektrisch leitend miteinander verbunden. Somit sind die Steuerungseinrichtung 4, der erste Spannungsregler 5 und der zweite Spannungsregler 6 elektrisch in Reihe geschaltet. Der erste Masseanschluss 14 und der zweite Masseanschluss 17 sind mit der Masse 11 verbunden. Vorzugsweise sind die genannten elektrischen Verbindungen unmittelbar, also ohne in Reihe geschaltete weitere elektrische Komponenten.

Im fehlerfreien Betrieb des Messgeräts 1 liegt die von der Versorgungsspannungsquelle 3 erzeugte erste Versorgungsspannung U₁ = 5 V am zweiten Versorgungsspannungseingang 15 an. Der zweite Spannungsregler 6 ist eingerichtet, eine zweite Versorgungsspannung U₂ = 3,3 V zu erzeugen und diese am zweiten Versorgungsspannungsausgang 16 zur Verfügung zu stellen. Dazu muss eine am zweiten Versorgungsspannungseingang 15 anliegende Spannung um mindestens 200 mV höher sein als die zweite Versorgungsspannung U₂, also mindestens 3,5 V betragen, und innerhalb des Versorgungsspannungsbereichs des zweiten Spannungsreglers 6 liegen. Beides ist vorliegend gegeben. Der erste Spannungsregler 5 ist eingerichtet, eine dritte Versorgungsspannung U₃ = 3,0 V zu erzeugen und am ersten Versorgungsspannungsausgang 13 zur Verfügung zu stellen. Dazu muss eine am ersten Versorgungsspannungseingang 12 anliegende Spannung um mindestens 200 mV höher sein als die dritte Versorgungsspannung U₃, also mindestens 3,2 V betragen, und innerhalb des Versorgungsspannungsbereichs des ersten Spannungsreglers 5 liegen. Beides ist vorliegend ebenfalls gegeben, insbesondere liegen die erste Versorgungsspannung U₁ = 5 V und die zweite Versorgungsspannung U₂ = 3,3V innerhalb des Versorgungsspannungsbereichs. Der bereits genannte Versorgungsspannungsbereich der Steuerungseinrichtung 4 umfasst die zweite Versorgungsspannung U₂ = 3,3 V und die dritte Versorgungsspannung U₃ = 3,0 V, nicht jedoch die erste Versorgungsspannung U₁ = 5 V. Die Versorgungsspannungsquelle 3 liefert über den zweiten Versorgungsspannungseingang 15 die Leistung, die von dem zweiten Spannungsregler 6 zum eigenen Betrieb und zur Versorgung des ersten Spannungsreglers 5 und der Steuerungseinrichtung 4 benötigt wird. Entsprechend liefert der zweite Spannungsregler 6 über den ersten Versorgungsspannungseingang 12 die Leistung, die von dem ersten Spannungsregler 5 zum eigenen Betrieb und zur Versorgung der Steuerungseinrichtung 4 benötigt wird. Schließlich liefert der erste Spannungsregler 5 über den Versorgungsspannungseingang 7 der Steuerungseinrichtung 4 die Leistung, die von der Steuerungseinrichtung 4 zum Betrieb benötigt wird. Dabei sind der erste Spannungsregler 5 und der zweite Spannungsregler 6 zur Abführung der Wärme ausgebildet, die bei der Versorgung mit den genannten Leistungen entsteht, wenn die am jeweiligen Versorgungsspannungseingang anliegende Spannung innerhalb des Versorgungsspannungsbereichs liegt.

Sowohl der erste Spannungsregler 5 als auch der zweite Spannungsregler 6 sind derart ausgebildet, dass eine Überspannung am ersten Versorgungsspannungseingang 12 oder am zweiten Versorgungsspannungseingang 15 einen Ausfall des ersten Spannungsreglers 5 bzw. des zweiten Spannungsreglers 6 derart bewirkt, dass der erste Spannungsregler 5 den ersten Versorgungsspannungseingang 12 und den ersten Versorgungsspannungsausgang 13 bzw. der zweite Spannungsregler 6 den zweiten Versorgungsspannungseingang 15 und den zweiten Versorgungsspannungsausgang 16 elektrisch leitend miteinander kurzschließt.

Die Steuerungseinrichtung 4 ist ausgebildet, eine erste Überwachungsspannung am Versorgungsspannungseingang 7, eine zweite Überwachungsspannung am ersten Spannungsmesseingang 9 und eine dritte Überwachungsspannung am zweiten Spannungsmesseingang 10 zu überwachen. Dazu ist zum einen der erste Spannungsmesseingang 9 mit dem zweiten Versorgungsspannungsausgang 16 und zum anderen der zweite Spannungsmesseingang 10 mit dem zweiten Versorgungsspannungseingang 15 elektrisch leitend verbunden. Somit überwacht die Steuerungseinrichtung 4 im Betrieb die dritte Versorgungsspannung U₃ am Versorgungsspannungseingang 7, die zweite Versorgungsspannung U₂ am ersten Spannungsmesseingang 9 und die erste Versorgungsspannung U₁ am zweiten Spannungsmesseingang 10. Weiter ist die Steuerungseinrichtung 4 eingerichtet, eine Veränderung der ersten Überwachungsspannung dem Ausfallen des ersten Spannungsreglers 5 zuzuordnen, eine Veränderung der zweiten Überwachungsspannung dem Ausfall des zweiten Spannungsreglers 6 zuzuordnen und eine Veränderung der dritten Überwachungsspannung einem Fehler der Versorgungsspannungsquelle 3 zuzuordnen.

Eine Veränderung der ersten Überwachungsspannung tritt dann auf, wenn der erste Spannungsregler 5 ausfällt und der erste Spannungsregler 5 den ersten Versorgungsspannungseingang 12 mit dem ersten Versorgungsspannungsausgang 13 kurzschließt. Dadurch ändert sich die erste Überwachungsspannung von 3 V auf 3,3 V. Eine Veränderung der zweiten Überwachungsspannung entsteht dadurch, dass der zweite Spannungsregler 6 bei einem Ausfall den zweiten Versorgungsspannungseingang 15 mit dem zweiten Versorgungsspannungsausgang 16 kurzschließt. Dadurch verändert sich die zweite Überwachungsspannung von 3,3 V auf 5 V.

Somit ist die bestimmungsgemäße Funktion der elektrischen Funktionsgruppe 2 auch bei einem Fehler durch den Ausfall des ersten Spannungsreglers 5 oder des zweiten Spannungsreglers 6 gewährleistet, ohne dass die funktionale Sicherheit beeinträchtigt ist, wobei der Fehler insbesondere durch eine Überspannung bewirkt werden kann.

### Bezugszeichen

- 1: Messgerät
- 2: Elektrische Funktionsgruppe
- 3: Versorgungsspannungsquelle
- 4: Steuerungseinrichtung
- 5: Erster Spannungsregler
- 6: Zweiter Spannungsregler
- 7: Versorgungsspannungseingang
- 8: Masseanschluss
- 9: Erster Spannungsmesseingang
- 10: Zweiter Spannungsmesseingang
- 11: Masse
- 12: Erster Versorgungsspannungseingang
- 13: Erster Versorgungsspannungsausgang
- 14: Erster Masseanschluss
- 15: Zweiter Versorgungsspannungseingang
- 16: Zweiter Versorgungsspannungsausgang
- 17: Zweiter Masseanschluss

- U₁: Erste Versorgungsspannung
- U₂: Zweite Versorgungsspannung
- U₃: Dritte Versorgungsspannung

## Patentansprüche

1. Elektrische Funktionsgruppe (2) mit einer Steuerungseinrichtung (4) und einem ersten Spannungsregler (5),
wobei die Steuerungseinrichtung (4) einen Versorgungsspannungseingang (7) aufweist,
wobei der erste Spannungsregler (5) einen ersten Versorgungsspannungseingang (12) und einen ersten Versorgungsspannungsausgang (13) aufweist, zum Anschluss an eine Versorgungsspannungsquelle (3) über den ersten Versorgungsspannungseingang (12) und zur Versorgung der Steuerungseinrichtung (4) über den ersten Versorgungsspannungsausgang (13) ausgebildet ist, wobei der erste Versorgungsspannungsausgang (13) und der Versorgungsspannungseingang (7) der Steuerungseinrichtung (4) miteinander verbunden sind,
wobei die Funktionsgruppe (2) einen zweiten Spannungsregler (6) mit einem zweiten Versorgungsspannungseingang (15) und einem zweiten Versorgungsspannungsausgang (16) aufweist,
wobei der zweite Spannungsregler (6) zum Anschluss an die Versorgungsspannungsquelle (3) über den zweiten Versorgungsspannungseingang (15) und zur Versorgung des ersten Spannungsreglers (5) und der Steuerungseinrichtung (4) über den zweiten Versorgungsspannungsausgang (16) ausgebildet ist und
wobei der zweite Versorgungsspannungsausgang (16) und der erste Versorgungsspannungseingang (12) miteinander verbunden sind, und wobei der erste Spannungsregler (5) derart ausgebildet ist, bei einem Ausfall des ersten Spannungsreglers (5) den ersten Versorgungsspannungseingang (12) und den ersten Versorgungsspannungsausgang (13) miteinander kurzzuschließen,
**dadurch gekennzeichnet,**
**dass** die Steuerungseinrichtung (4) eingerichtet ist, eine erste Überwachungsspannung am Versorgungsspannungseingang (7) der Steuerungseinrichtung (4) zu überwachen und eine Veränderung der ersten Überwachungsspannung dem Ausfall des ersten Spannungsreglers (5) zuzuordnen.

2. Elektrische Funktionsgruppe nach Anspruch 1, **dadurch gekennzeichnet, dass** der erste Spannungsregler (5) derart ausgebildet ist, dass eine Überspannung am ersten Versorgungsspannungseingang (12) den Ausfall des ersten Spannungsreglers (5) bewirkt.

3. Elektrische Funktionsgruppe (2) nach Anspruch 1 oder 2, **dadurch gekennzeichnet, dass** der zweite Spannungsregler (6) derart ausgebildet ist, bei einem Ausfall des zweiten Spannungsreglers (6) den zweiten Versorgungsspannungseingang (15) und den zweiten Versorgungsspannungsausgang (16) miteinander kurzzuschließen.

4. Elektrische Funktionsgruppe (2) nach Anspruch 3, **dadurch gekennzeichnet, dass** der zweite Spannungsregler (6) derart ausgebildet ist, dass eine Überspannung am zweiten Versorgungsspannungseingang (15) den Ausfall des zweiten Spannungsreglers (6) bewirkt.

5. Elektrische Funktionsgruppe (2) nach Anspruch 3 oder 4, **dadurch gekennzeichnet, dass** die Steuerungseinrichtung (4) eingerichtet ist, eine zweite Überwachungsspannung am ersten Versorgungsspannungseingang (12) zu überwachen und eine Veränderung der zweiten Überwachungsspannung dem Ausfall des zweiten Spannungsreglers (6) zuzuordnen.

6. Elektrische Funktionsgruppe (2) nach einem der Ansprüche 1 bis 5, **dadurch gekennzeichnet, dass** die Steuerungseinrichtung (4) im Betrieb eingerichtet ist, eine dritte Überwachungsspannung am zweiten Versorgungsspannungseingang (15) zu überwachen und eine Veränderung der dritten Überwachungsspannung einem Fehler zuzuordnen.

7. Messgerät (1) mit einer elektrischen Funktionsgruppe (2),
**dadurch gekennzeichnet,**
**dass** die elektrische Funktionsgruppe (2) nach einem der Ansprüche 1 bis 6 ausgebildet ist.

## Claims

1. Electrical function group (2) with a control device (4) and a first voltage regulator (5),
wherein the control device (4) has a supply voltage input (7),
wherein the first voltage regulator (5) has a first supply voltage input (12) and a first supply voltage output (13) and is designed to be connected to a supply voltage source (3) via the first supply voltage input (12) and to supply the control device (4) via the first supply voltage output (13),
wherein the first supply voltage output (13) and the supply voltage input (7) of the control device (4) are connected to one another,
wherein the function group (2) has a second voltage regulator (6) with a second supply voltage input (15) and a second supply voltage output (16),
wherein the second voltage regulator (6) is designed to be connected to the supply voltage source (3) via the second supply voltage input (15) and to supply the first voltage regulator (5) and the control device (4) via the second supply voltage output (16), and
wherein the second supply voltage output (16) and the first supply voltage input (12) are connected to one another, and
wherein the first voltage regulator (5) is designed such that, in the event of failure of the first voltage regulator (5), the first supply voltage input (12) and the first supply voltage output (13) are short-circuited with one another,
**characterized in**
**that** the control device (4) is designed to monitor a first monitoring voltage at the supply voltage input (7) of the control device (4) and to assign a change in the first monitoring voltage to the failure of the first voltage regulator (5).

2. Electrical function group (2) according to claim 1, **characterized in that** the first voltage regulator (5) is designed such that an overvoltage at the first supply voltage input (12) causes the failure of the first voltage regulator (5).

3. Electrical function group (2) according to claim 1 or 2, **characterized in that** the second voltage regulator (6) is designed such that, in the event of failure of the second voltage regulator (6), the second supply voltage input (15) and the second supply voltage output (16) are short-circuited with one another.

4. Electrical function group (2) according to claim 3, **characterized in that** the second voltage regulator (6) is designed such that an overvoltage at the second supply voltage input (15) causes the failure of the second voltage regulator (6).

5. Electrical function group (2) according to claim 3 or 4, **characterized in that** the control device (4) is designed to monitor a second monitoring voltage at the first supply voltage input (12) and to assign a change in the second monitoring voltage to the failure of the second voltage regulator (6).

6. Electrical function group (2) according to any one of claims 1 to 5, **characterized in that**, during operation, the control device (4) is designed to monitor a third monitoring voltage at the second supply voltage input (15) and to assign a change of the third monitoring voltage to an error.

7. Measuring device (1) with an electrical function group (2),
**characterized in**
**that** the electrical function group (2) is designed according to any one of claims 1 to 6.

## Revendications

1. Groupe fonctionnel électrique (2), comprenant un dispositif de commande (4) et un premier régulateur de tension (5),
le dispositif de commande (4) présentant une entrée de tension d'alimentation (7),
le premier régulateur de tension (5) présentant une première entrée de tension d'alimentation (12) et une première sortie de tension d'alimentation (13) pour le raccordement à une source de tension d'alimentation (3) par l'intermédiaire de la première entrée de tension d'alimentation (12) et pour l'alimentation du dispositif de commande (4) par l'intermédiaire de la première sortie de tension d'alimentation (13), la première sortie de tension d'alimentation (13) et l'entrée de tension d'alimentation (7) du dispositif de commande (4) étant reliées l'une à l'autre,
le groupe fonctionnel (2) présentant un deuxième régulateur de tension (6) doté d'une deuxième entrée de tension d'alimentation (15) et d'une deuxième sortie de tension d'alimentation (16),
le deuxième régulateur de tension (6) étant réalisé pour le raccordement à la source de tension d'alimentation (3) par l'intermédiaire de la deuxième entrée de tension d'alimentation (15) et pour l'alimentation du premier régulateur de tension (5) et du dispositif de commande (4) par l'intermédiaire de la deuxième sortie de tension d'alimentation (16), et
la deuxième sortie de tension d'alimentation (16) et la première entrée de tension d'alimentation (12) étant reliées l'une à l'autre, et
le premier régulateur de tension (5) étant réalisé de telle sorte qu'en cas de défaillance du premier régulateur de tension (5), il court-circuite la première entrée de tension d'alimentation (12) et la première sortie de tension d'alimentation (13) l'une avec l'autre,
**caractérisé en ce que** le dispositif de commande (4) est aménagé pour surveiller une première tension de surveillance à l'entrée de tension d'alimentation (7) du dispositif de commande (4) et pour attribuer une variation de la première tension de surveillance à la défaillance du premier régulateur de tension (5).

2. Groupe fonctionnel électrique selon la revendication 1, **caractérisé en ce que** le premier régulateur de tension (5) est réalisé de telle sorte qu'une surtension à la première entrée de tension d'alimentation (12) provoque la défaillance du premier régulateur de tension (5).

3. Groupe fonctionnel électrique (2) selon la revendication 1 ou 2, **caractérisé en ce que** le deuxième régulateur de tension (6) est réalisé de telle sorte qu'en cas de défaillance du deuxième régulateur de tension (6), il court-circuite la deuxième entrée de tension d'alimentation (15) et la deuxième sortie de tension d'alimentation (16) l'une avec l'autre.

4. Groupe fonctionnel électrique (2) selon la revendication 3, **caractérisé en ce que** le deuxième régulateur de tension (6) est réalisé de telle sorte qu'une surtension à la deuxième entrée de tension d'alimentation (15) provoque la défaillance du deuxième régulateur de tension (6).

5. Groupe fonctionnel électrique (2) selon la revendication 3 ou 4, **caractérisé en ce que** le dispositif de commande (4) est aménagé pour surveiller une deuxième tension de surveillance à la première entrée de tension d'alimentation (12) et pour attribuer une variation de la deuxième tension de surveillance à la défaillance du deuxième régulateur de tension (6).

6. Groupe fonctionnel électrique (2) selon l'une quelconque des revendications 1 à 5, **caractérisé en ce que** le dispositif de commande (4) est aménagé en cours de fonctionnement pour surveiller une troisième tension de surveillance à la deuxième entrée de tension d'alimentation (15) et pour attribuer une variation de la troisième tension de surveillance à un défaut.

7. Appareil de mesure (1) comprenant un groupe fonctionnel électrique (2), **caractérisé en ce que** le groupe fonctionnel électrique (2) est réalisé selon l'une quelconque des revendications 1 à 6.
